# EUROPEAN PATENT APPLICATION

(11) **EP 2 706 463 A1**
(43) Date of publication of application: **12.03.2014**
(21) Application number: 13183962.3
(22) Date of filing: 11.09.2013
(51) Int. Cl.: G06F 13/40, H01R 24/58, H04R 1/10, H04R 5/04

(54) **Method and apparatus for detecting insertion of external audio outputting device in electronic device**

(30) Priority: 11.09.2012 KR 20120100448
(71) Applicant: Samsung Electronics Co., Ltd, Gyeonggi-do 443-742 (KR)
(72) Inventor: Jung, Euy-Gon, 443-742 Gyeonggi-do (KR)
(74) Representative: Jenkins, Richard Gavin

(57) **Abstract**

Apparatus and method for detecting insertion of an external audio outputting device in an electronic device. The apparatus comprises an earphone socket into which the external audio outputting device is inserted. The earphone socket includes first and second terminal sets, each terminal set having at least two electrical contacts. A controller determines an insertion condition if each of the terminal sets is shorted, and determines a non-insertion condition if only one terminal set is shorted, or if neither of the terminal sets is shorted.

## Description

### BACKGROUND

### Technical Field

The present disclosure relates to a method and apparatus for detecting insertion of an external audio outputting device such as an earphone in an electronic device such as a portable terminal.

### Description of the Related Art

Portable electronic devices such as music players, recording/playback devices and portable terminals (smart phones, cell phones, tablets, laptops, radios, etc.) include a cylindrical headphone socket within which a plug of an external audio outputting device is inserted. The external audio outputting device may be an earphone, earbuds, headphones, a headset (typically defined as a headphones/microphone combination), or a portable external speaker.Especially, these days, portable terminals have become increasingly popular and are widely used. to play different multimedia content. A typical portable terminal provides the same functions as music player devices, portable multimedia player (PMP) devices, radios, etc.

Herein, the term "audio device" will refer to any electronic device with audio outputting capability, such as a portable terminal, music player, radio, tablet, laptop, etc. "External audio outputting device" refers to an earphone, headphones, headset or portable external speaker having a plug that is inserted into the socket of the audio device designated for outputting audio signals. Hereafter, for simplicity of explanation, an earphone will be used as an example of the external audio outputting device. It is assumed hereafter that the earphone optionally includes a microphone to enable two way communication. A portable terminal, generally defined as an electronic device capable of receiving and/or transmitting a communication signal from/to a remote device, will be used as an example of an audio device.

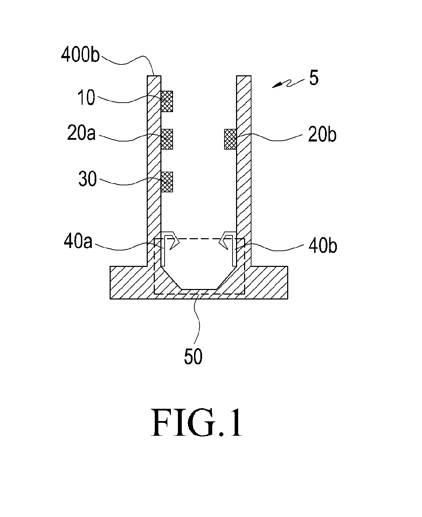

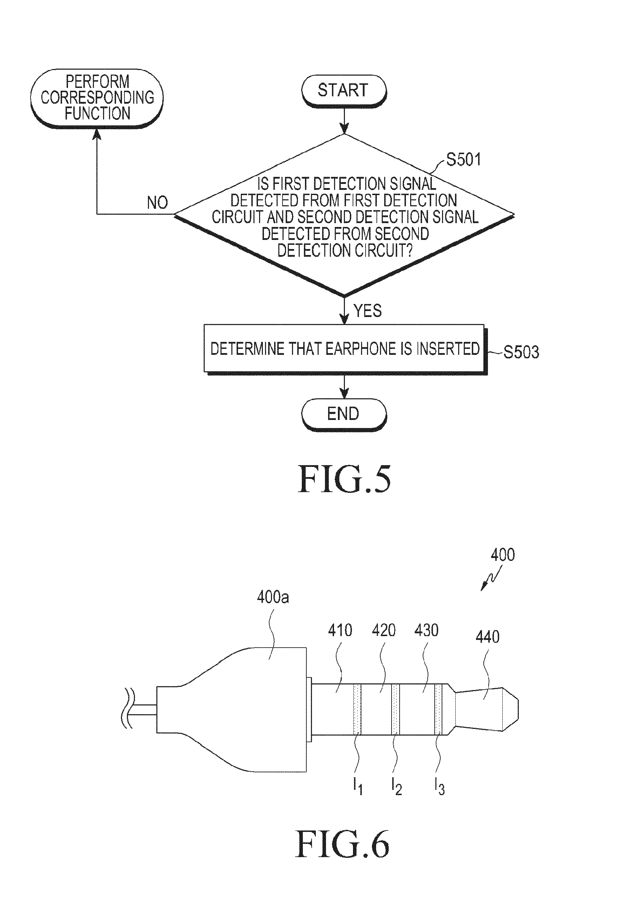

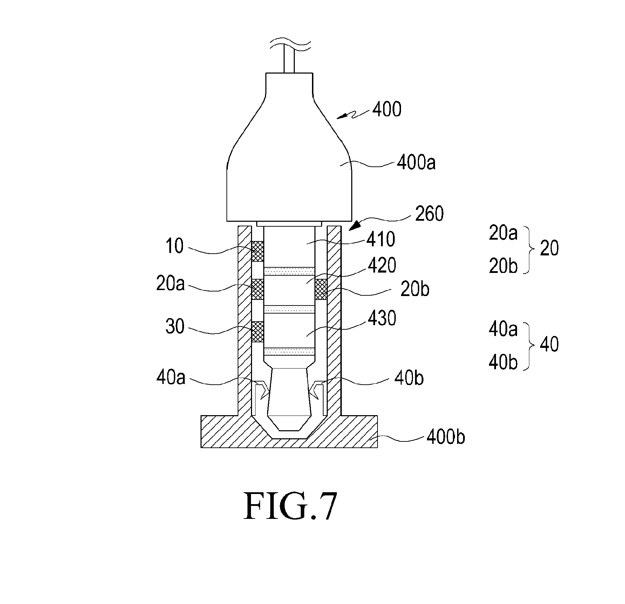

When the portable terminal detects insertion of the earphone through the socket, audio being reproduced is switched from a speaker of the device to the earphone. Conventional detection technologies, however, suffer from problems in properly detecting insertion of the earphone, several of which will be reviewed with reference to FIG. 1 below. The example assumes that the earphone includes a remote controller comprising a microphone and multifunctional control buttons.FIG. 1 illustrates a cross-sectional view of a conventional "TRRS" ((Tip, Ring, Ring, Sleeve) type of earphone socket 5. The socket 5 includes a microphone terminal 10, a ground terminal 20a, ground detection terminal 20b on opposing sides, an R terminal 30, an L terminal 40a and L detection terminal 40b on opposing sides of a body 400b of the socket 5. Referring momentarily to FIG. 6, a TRRS earphone plug 400 is shown; and in FIG. 7, the TRRS plug 400 is shown fully inserted within the socket 5. The TRRS plug 400 has an electrical contact "tip" 440, a first electrical contact "ring" 430, a second ring 420 and an electrical contact "sleeve" 410, which are electrically isolated via isolation rings I₁, I₂ and I₃. When the plug 400 is fully inserted in the socket 5, the tip 440 shorts the L terminals 40a and 40b; the first ring 430 electrically contacts the R terminal 30; the ground and ground detection terminals 20a, 20b are shorted through contact with the second ring 420; and the sleeve 410 electrically contacts the microphone terminal 10.

In one conventional technology, earphone insertion is detected by the portable terminal when the ground terminal 20a and ground detection terminal 20b are detected to be shorted together. However, if the plug is only partially pulled out of the socket in a disconnection attempt, a part of the earphone plug is likely to still connect the ground terminal 20a and the ground detection terminal 20b.

For example, the ring 420 may still short the ground terminals 20a and 20b together in a partial extraction condition. If the ground terminal 20a and the ground detection terminal 20b are connected in the course of disconnecting the earphone from the socket, the portable terminal still detects that the earphone is inserted in the socket. This false detection may cause an unwanted function to be executed in the portable terminal. For example, while the earphone is being disconnecting, the portable terminal may malfunction by falsely determining that a Send or End key is inputted.

Another problem with the use of the ground terminal shorting detection scheme is, if the plug is partially extracted or inserted, the ring 430 (instead of the ring 420) may contact the ground terminals 20a, 20b while the tip 440 does not contact the L terminals 40a, 40b. This causes the portable terminal to falsely detect an insertion condition.

To solve the foregoing problems, another conventional technology to detect insertion of the earphone by using the L terminal 40a and the L detection terminal 40b has been suggested. That is, determination that the earphone is inserted is made when insertion of the earphone into the socket causes the plug of the earphone to connect the L terminal 40a and the L detection terminal 40b. That is, the tip 440 shorts the terminals 40a, 40b together, and this shorting condition is detected by circuitry within the portable terminal.

However, the conventional portable terminal typically has the socket into which the earphone is inserted arranged on the upper part of the portable terminal, and thus is susceptible to incoming electrolytic substances, such as dust or water, causing the portable terminal to operate improperly. Note that water acts as a good conductor whereas dust can in some circumstances act as a direct conductor, or, as an indirect conductor if it attracts moisture.

For example, if dust or water comes into the bottom of the socket, represented by 50 in FIG. 1, despite no earphone insertion, the L terminal 40a and the L detection terminal 40b are shorted together and the portable terminal recognizes that the earphone is inserted and accordingly operates improperly.

Note that some of the above-described problems are also applicable to a "TRS" type plug which has only one ring for connection to the R terminal, and one sleeve which connects to the ground terminals.Accordingly, there is a need for a method of detecting earphone insertion in a portable terminal that avoids or reduces the malfunction problems associated with prior art methods.

### SUMMARY

In accordance with an exemplary embodiment, an apparatus for detecting insertion of an external audio outputting device in an electronic device is provided. The apparatus comprises an earphone socket into which the external audio outputting device is inserted. The earphone socket comprising first and second terminal sets, each terminal set having at least two electrical contacts,. A controller determines an insertion condition if each of the terminal sets is shorted, and determines a non-insertion condition if only one terminal set is shorted, or if neither of the terminal sets is shorted.

The first terminal set may be a ground terminal set comprising a ground terminal and a ground detection terminal as the at least two electrical contacts. The second terminal set may be an L terminal set comprising an L terminal and an L detection terminal as the at least two electrical contacts.

The apparatus may further include a first detection circuit that provides a first detection signal to the controller. The first detection signal can be a first voltage level if the first terminal set is shorted and a different voltage level if the first terminal set is not shorted. A second detection circuit may provide to the controller a second detection signal, where the second detection signal is a second voltage level if the second terminal set is shorted and another voltage level if the second terminal set is not shorted.

Disclosed is a method of detecting insertion of an external audio outputting device in an electronic device having an earphone socket comprising first and second terminal sets, where each terminal set comprises at least two electrical contacts. An insertion condition is determined when each of the first and second terminal sets is shorted. A non-insertion condition is detected if only one of the terminal sets is shorted, or if none of the terminal sets is shorted.

### BRIEF DESCRIPTION OF THE DRAWINGS

The above and other features and advantages of the present invention will become more apparent by describing in detail exemplary embodiments thereof with reference to the attached drawings in which like reference numerals ref to like elements, in which:
FIG. 1 is a cross-sectional view of a conventional earphone socket for explaining conventional technology and embodiments of the present invention;
FIG. 2 is a block diagram of a portable terminal according to an embodiment of the present invention;
FIG. 3 is a block diagram of a detection circuit arrangement for detecting earphone insertion and non-insertion conditions according to an embodiment of the present invention;
FIG. 4 is a flowchart of a process of detecting insertion of an external audio outputting device at the portable terminal according to an embodiment of the present invention;
FIG. 5 is a flowchart of a process of detecting insertion of an external audio outputting device at the portable terminal, according to an embodiment of the present invention
FIG. 6 illustrates a conventional TRRS type earphone plug;
FIG. 7 is a cross-sectional view of the conventional ear socket of FIG. 1 with the earphone of FIG. 4 fully inserted therein; and
FIG. 8 is a schematic diagram of an earphone detection circuit according to an embodiment of the present invention.

### DETAILED DESCRIPTION OF EXEMPLARY EMBODIMENTS

Embodiments of the present invention will now be described with reference to accompanying drawings. For convenience of explanation, an external audio outputting device is herein after referred to as an earphone (e.g. headset) having a microphone. However, the earphone may be replaced by any other devices, such as a headphone without a microphone, or a portable external speaker and so forth; thus the external audio outputting device usable with the present invention is not limited to the earphone. In addition, a portable terminal is used as an example of an audio device; however, it will be appreciated that the described embodiments are applicable to other electronic devices such as music players and recording/playback devices, as well as to certain fixed (non-portable) electronic devices that may or may not include remote communication capability (i.e., "terminal" or "non-terminal" type devices).

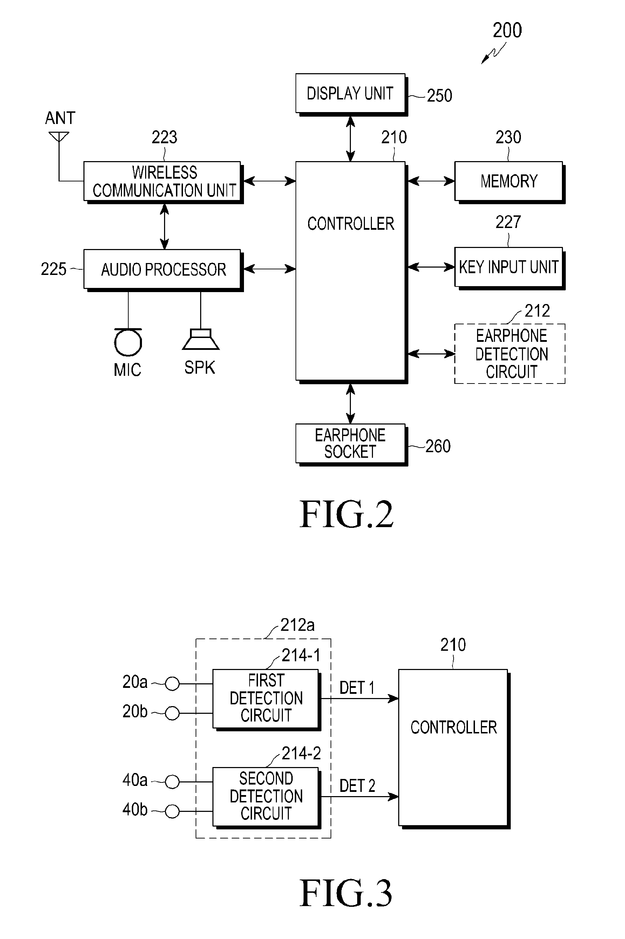

FIG. 2 is a block diagram of a portable terminal 200, according to an embodiment of the present invention.

The portable terminal 200 is assumed to be an easy-to-carry, e.g., handheld mobile electronic device that provides at least an audio output. General examples of the portable terminal include conventional feature phones and devices driven by Bada®, Tizen®, Windows® series (for example, Windows 8), iOS®, and Android, such as smartphones and tablets. Additionally, the portable terminal may be a notebook, digital camera (with or without communication capability), video phone, etc. It will be appreciated that the portable terminal is not limited to the foregoing examples. In any event, the insertion detection methods and apparatus of the present invention may be applied to modify such commercially available portable terminals.

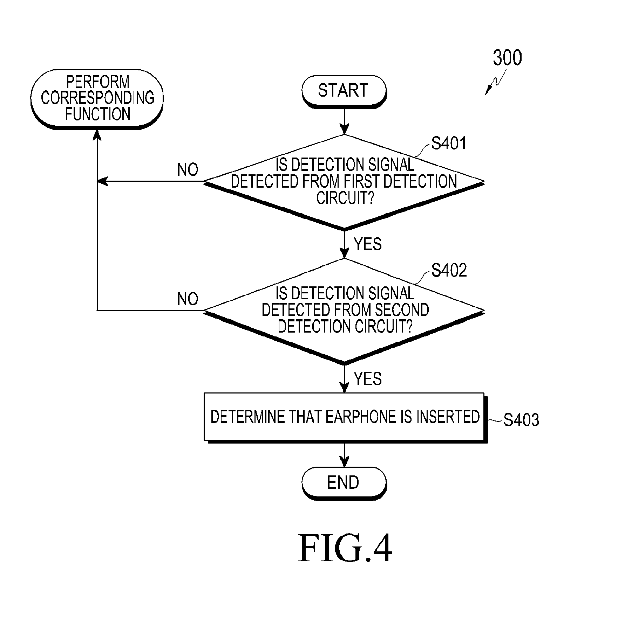

Portable terminal 200 includes an earphone socket 260 to receive an external earphone plug such as that shown in FIG. 4. A controller 210 controls overall operations of the portable terminal 200. According to embodiments, controller 210 determines whether an earphone is inserted into the earphone socket 260. To this end, controller 210 may include an earphone detection circuit 212. Alternatively, the earphone detection circuit 212 can be provided separately from controller 210. Portable terminal 200 also includes a memory 230, key input unit 227, display unit 250, wireless communication unit 223, audio processor 225, antenna ANT, microphone MIC and speaker SPK, all of which may be of conventional designs.

Referring momentarily to FIGs. 1, 6 and 7 collectively, the earphone socket 260 may be the same design as the conventional TRRS type socket 5 of FIG. 1 described earlier. The socket 260 includes a ground terminal 20a and a ground detection terminal 20b. These terminals (equivalently, "contacts") 20a, 20b together constitute a "terminal set" 20, where terminal 20a is a first electrical contact and terminal 20b is a second electrical contact of terminal set 20. When the earphone plug 400 is fully inserted in the socket 260, the ring 420 makes electrical contact with both contacts 20a, 20b, i.e., the contacts are shorted together, whereby the terminal set 20 is said to be shorted.

Similarly, the L terminals ("contacts") 40a, 40b together comprise a terminal set 40, and when the earphone plug 400 is fully inserted, contacts 40a, 40b are shorted together via the tip 440, whereby terminal set 40 is shorted.

An insertion condition is a condition of the plug 400 inserted sufficiently such that the tip 440 shorts the terminal set 40, and the ring 430 shorts the terminal set 20. A non-insertion condition is a condition in which only one, or both, of the terminal sets 20 and 40 is not shorted.

According to embodiments, controller 210 in conjunction with detection circuit 212 is configured to determine an insertion condition when the first terminal set 20 is shorted and the second terminal set 40 is shorted. Controller 210 determines that a non-insertion condition exists if only one of the terminal sets 20 and 40 is detected to be shorted, or if none of the terminal sets 20 and 40 is detected to be shorted. Accordingly, while the plug 400 is not inserted, if water or another conductor enters the earphone socket 260 as indicated by 50 in FIG. 1, controller 210 will not detect this condition as an insertion condition because controller 210 does not detect that the ground terminal set 20 is shorted. Moreover, if the plug 400 is only partially inserted, even if the ground terminal set 20 is shorted by, e.g., the ring 430 instead of the ring 420, if the tip 440 does not contact the terminals 40a and 40b, the controller determines that the terminal set 40 is not shorted, and thus determines a non-insertion condition. In this manner, the portable terminal 200 does not malfunction as a result of a false insertion detection such as those occurring in the prior art examples discussed above.

FIG. 3 is a block diagram of a detection circuit arrangement for detecting earphone insertion and non-insertion conditions according to an embodiment of the present invention

Referring momentarily to FIG. 3, an embodiment 212a of earphone detection circuit 212 is illustrated in block diagram form. Here, earphone detection circuit 212a is a circuit separate from controller 210, and includes a first detection circuit 214-1 electrically coupled to ground terminals 20a and 20b, and a second detection circuit 214-2 electrically coupled to L terminals 40a and 40b. Circuit 214-1 detects whether terminals 20a and 20b are shorted or electrically isolated. Circuit 214-1 produces an output signal DET1 to controller 210, which is a first state (e.g., LOW) when the terminals 20a and 20b are detected to be shorted, and a second state (e.g., HIGH) when the terminals 20a, 20b are detected to be electrically isolated. Similarly, second detection circuit 214-2 provides an output signal DET2 to controller 210 which is one voltage level (state) when terminals 40a and 40b are detected shorted, and another voltage level (state) when terminals 40a and 40b are detected electrically isolated.

With continued reference to FIG. 2, a wireless transceiver 223 includes a radio frequency (RF) unit and a modem. The RF unit includes an RF transmitter for up converting the frequency of a signal to be transmitted and amplifying the signal, and an RF receiver for low-noise amplifying a received signal and down converting the frequency of the received signal. The modem includes a transmitter for encoding and modulating the signal to be transmitted and a receiver for demodulating and decoding the signal received from the RF unit.

Using the wireless transceiver 223, e.g., history of insertion of an earphone 400 into an earphone socket 260 may be backed up by (stored in) a pre-established server (e.g., a cloud server).

An audio processor 225 may constitute a codec that includes a data codec and an audio codec. The data codec processes e.g., packet data, and the audio codec processes e.g., sound and multimedia files. The audio processor 225 converts digital audio signals received from the modem into analog signals and then plays the analog signals, or converts analog audio signals generated by a microphone into digital audio signals through the audio codec and transmits the digital audio signals to the modem. The audio codec may be separately included in the portable terminal 200, or may be incorporated into controller 210.

With the audio processor 225, a user may also be notified of whether the earphone is inserted in an earphone socket 260 as audio information.

A key input unit 227 may include keys required to input alphanumerical information, function keys required to set many different functions, a touch pad, etc. If a display unit 250 is implemented with a touch screen, the key input unit 227 may include only a predetermined minimum number of keys and the display unit 250 may replace some key functions of the key input unit 227. Using the key input unit 227, the user may adjust volume of the sound output of the earphone inserted in the earphone socket 260.

A memory 230 may include a program memory and a data memory, and the program memory stores a program to control general operations of the portable terminal. The program memory may also store a program which, when executed by a processor of controller 210, determines insertion and non-insertion conditions with respect to the earphone socket 260 on the basis of detection signals received from the detection circuit 212. The memory 230 may further include an external memory, such as compact flash (CF), secure digital (SD), micro secure digital (Micro-SD), mini secure digital (Mini-SD), extreme digital (xD), memory stick, and the like. The memory 230 may also include a disc, such as hard disc drive (HDD), solid state disc (SSD), and the like.

The display unit 250 may be formed of a liquid crystal display (LCD) or an organic light emitting diodes (OLED), such as PMOLED or AMOLED, and outputs different display information generated by the portable terminal. The display unit 250 may operate as an input unit together with the key input unit 227 to control the portable terminal by including e.g., a capacitive, pressure sensitive, or electromagnetic touch screen. Using the display unit 250, the user may adjust volume of the sound output of the earphone inserted in the earphone socket 260.

The earphone socket 260, shown in cross-section in FIGs. 1 and 5 is a connecting interface into which the external audio outputting device like the earphone 400 may be inserted. As described earlier, the socket 260 includes a microphone terminal 10, a ground terminal 20a, a ground detection terminal 20b, an R terminal 30, an L terminal 40a, and an L detection terminal 440b in its body.

In other embodiments, the external audio outputting device may be e.g., a headphone other than the ear phone, or the earphone without a microphone, and in these cases, the microphone terminal 410a may be omitted. For instance, the earphone socket 260 can be configured to accommodate a TRS type plug. In this case the earphone is not a 4 way earphone but a 3 way earphone, and the microphone terminal 410a may be omitted. Furthermore, an arrangement order of the microphone terminal 410, the ground terminal 420, the R terminal 430, and the L terminal 440 may be changed depending on whether the earphone is an American 4 way earphone or an European 4 way earphone.

The controller 210 may control general operations of the portable terminal 200, and change and control operations of the portable terminal in response to a user input through the key input unit 227 or the display unit 250. In addition, controller 210 performs the functions of determining insertion conditions and non-insertion conditions with respect to an earphone inserted or not inserted, respectively, in the earphone socket 260 described earlier. Detailed operations of the controller 210 according to an embodiment of the present invention will be described below.

FIG. 4 is a flowchart of a process of detecting insertion of the external audio outputting device at the portable terminal 200, according to an embodiment of the present invention. In

step S401, the controller 210 determines if a first detection signal is detected from the earphone detection circuit 212, indicative of a first terminal set being shorted. For instance, the first detection signal can be a signal indicating a first voltage state of the DET1 signal, which corresponds to the ground terminals 20a, 20b being shorted together. If the first detection signal is not detected, e.g., if the DET1 signal is in a second voltage state indicative of the ground terminals 20a, 20b being electrically isolated from each other, controller 210 determines that a non-insertion state exists with respect to the socket 260 and plug 400.

At step S402, controller 210 determines if a second detection signal is detected from the earphone detection circuit 212, indicative of a second terminal set being shorted. If so, the controller determines at S303 that the earphone is inserted. For instance, the second detection signal can be a signal indicating a first voltage state of the DET2 signal, which corresponds to the L terminals 40a, 40b being shorted together. If the second detection signal is not detected, controller 210 determines that a non-insertion state exists with respect to the socket 260 and plug 400.

The first voltage state of the DET1 signal can be designed to be the same voltage level of the first voltage state of the DET2 signal. Alternatively, these voltage levels can be opposite (e.g., one may be HIGH, the other may be LOW). In another option, the two signals DET1 and DET2 are provided with different types of logic levels altogether.

FIG. 5 is a flowchart of a process of detecting insertion of the external audio outputting device at the portable terminal 200, according to an embodiment of the present invention.

In step S501, the controller 210 determines if the first and second detection signals are detected from the first and second detection circuits, respectively, it is determined that the earphone is inserted at block S503. Otherwise, it is determined that the earphone is not inserted.

Referring again to FIG. 6, once the user inserts the plug 400a of the earphone 400 into the earphone socket to use an application with the earphone, each terminal included in the plug of the earphone, i.e., tip 440, first ring 430, second ring 420 and sleeve 410, is electrically coupled with each corresponding terminal of the earphone socket 260. FIG. 5 illustrates a case where the earphone plug, shown in FIG. 5, is inserted into the earphone socket, shown in FIG. 1.

As shown in FIG. 6, in the case the earphone plug 400a is inserted into the body 400b of the earphone socket 260, the microphone terminal 410 of the earphone plug is electrically coupled with the microphone terminal 10 of the earphone socket; the ground terminal 420 of the earphone plug is electrically coupled with the ground terminal 20 and the ground detection terminal 20b of the earphone socket; the R terminal 430 of the earphone plug is electrically coupled with the R terminal 30 of the earphone socket; and the L terminal 440 of the earphone plug is electrically coupled with the L terminal 40a and the L detection terminal 40b of the earphone socket. In an embodiment of the present invention, a first detection terminal is the ground detection terminal 20b of the earphone socket 260, and a second detection terminal is the L detection terminal 40b of the earphone socket 260.

As the earphone plug is inserted into the earphone socket, corresponding terminals are shorted together and detection signals are generated due to connection of the first and second detection terminals.

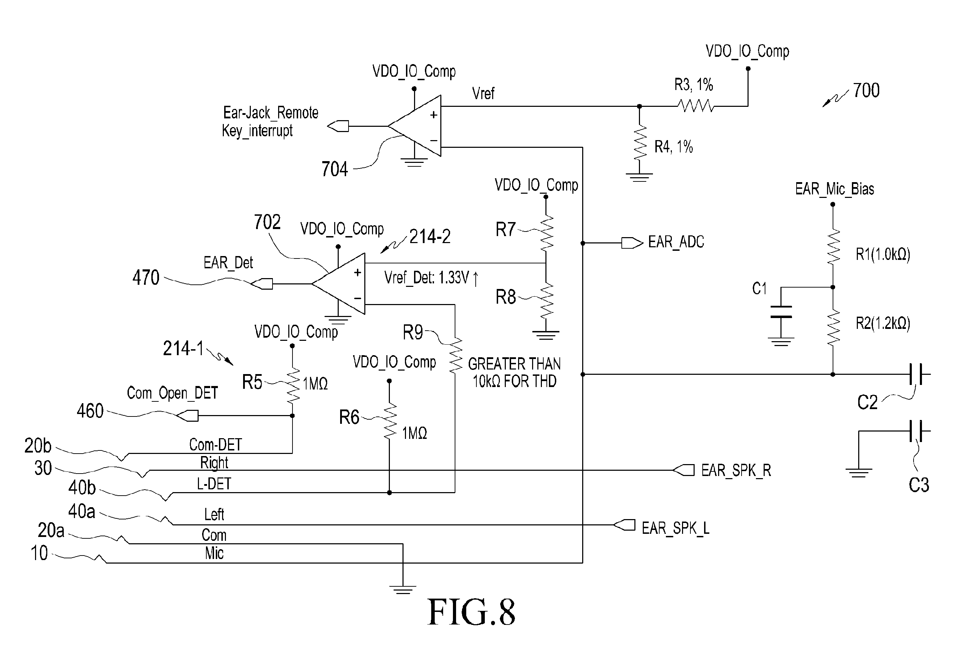

FIG. 8 is a schematic diagram of an earphone detection circuit 700 according to an embodiment of the present invention, which is an embodiment of the earphone detection circuit 212 described earlier.

In the circuit 700, if the ground terminal 20a and the ground detection terminal 20b are shorted together, a signal Com_Open_Det is at a first voltage state. This signal Com_Open_Det at terminal 460 is an example of the DET1 signal in the diagram of FIG. 7. The first state of Com_Open_Det is an example of the first signal detected from the first detection circuit in steps S401 or S403 of the method of FIG. 4. If the terminals 20a, 20b are isolated, the Com_Open_Det signal is at a second voltage state.

If the L terminal 40a and the L detection terminal 40b are shorted together, a signal Ear_Det at terminal 470 is at a first voltage state. This signal Ear_Det at terminal 470 is an example of the DET2 signal in the diagram of FIG. 7. The first state of Ear_Det is an example of the second signal detected from the second detection circuit in steps S402 or S505 of the method of FIG. 3. If the terminals 40a, 40b are isolated, the Ear_Det signal is in a second state.

In FIG. 8, the ground detection terminal (also referred to as Com-DET, short for Common Detector) 20b is connected to the terminal 406 at which the signal Com_Open_Det is output to the controller 210.The L detection terminal (also referred to as L-DET, short for Left detector) 40b is connected to the terminal 470 at which the signal EAR_Det, short for Ear Detector, is provided via an operational amplifier 702.

Once the earphone plug is fully inserted into the earphone socket, the detection signal Com_Open_Det (e.g., a certain level of voltage) is applied to the terminal 460, , and the operational amplifier 702 is driven to apply the detection signal EAR_DET (e.g., a certain level of voltage) to the terminal 470. Thus, in an embodiment of the present invention, it is understood that the controller 210 detects the detection signals from the first and second detection circuits through the terminals 460 and 470. A supply voltage VD_IO_Comp of the portable terminal 200 is applied to op amp 702. A resistor R5 (e.g., 1 M ohms) is coupled between the terminal 460 and a node receiving the supply voltage VD_IO_Comp.

A resistor R9 (e.g., greater than 10K ohms for Total Harmonic Distortion (THD)) is coupled between a negative input port of the op-amp 702 and the terminal 40b. A resistor R6 (e.g., 1Mohm) is coupled between terminal 40b and a node receiving the supply voltage.

An example of the first detection circuit 214-1 of FIG. 8 is the resistor R5 coupled between the supply voltage VDO_IO_Comp and terminal 460. When the terminals 20a and 20b are shorted, the circuit is closed whereby the voltage at 460 is driven to a LOW state. When the terminals 20a and 20b are isolated, the circuit is open, so that the voltage at terminal 460 floats up to the supply voltage VDO_IO_Comp, i.e., a HIGH state.

An example of the second detection circuit 214-2 is the circuit formed by: the op-amp 702; the resistor bridge R7, R8 coupled at their intersecting node to the positive input terminal of op-amp 702 (where the supply voltage is applied to the other side of R7 and the other side of R8 is grounded); the resistor R9 coupled between the minus input of op-amp 702 and the L-DET terminal 40b; and the resistor R6 coupled between a node supplying the supply voltage and the L-DET terminal 40b.

Other illustrated circuit components of the circuit 700 are relevant to the microphone functions. These include op-amp 704, resistors R1 to R4 and capacitors C1 to C3.

Returning to FIG. 4, in step S403, the controller 210 determines that the earphone is inserted and controls a corresponding function to be performed.

As described above with steps S401 and S402, determining that the first detection signal is applied from the second detection circuit after the detection signal is applied from the first detection circuit, the controller 210 determines that the earphone (e.g., the earphone plug) is inserted.

Thus, the controller 210 determines that the earphone is not inserted (i..e, a non-insertion condition is detected) until all detection signals from the first and second detection circuits are detected. Accordingly, controller 210 controls operations of the portable terminal for a non-insertion condition, e.g., outputting audio through the portable terminal speaker SPK instead of through the earphone. In this manner, the controller 210 prevents an abnormal signal from the earphone socket from being applied to the controller 210 due to wrong insertion of the earphone into the earphone socket or permeation of foreign substances into the earphone socket, and thus avoids the malfunction of the portable terminal due to the abnormal signal.

However, determining that the earphone is inserted, the controller 210 performs a function in response to the insertion of the earphone, maintaining the execution of a user application, or controlling an audio signal to be outputted through the earphone when an event of outputting the audio signal occurs.

Furthermore, determining that the earphone is inserted, the controller 210 may control a preset application, such as a music player to be run.

In the foregoing description of embodiments of the present invention, the earphone is determined to be inserted only if detection signals are detected through all of the ground detection terminal (first detection terminal) and the L detection terminal (second detection terminal) of the earphone socket. That is, the earphone is determined to be inserted if both conditions of i) the ground terminal set 20 being shorted and ii) the L terminal set 40 being shorted, are met. As such, embodiments of the present invention may solve problems of a conventional technology using only the ground detection terminal to detect insertion of the earphone, thus leading to the malfunction of the portable terminal, and of another conventional technology using only the L detection terminal to detect insertion of the earphone, thus causing the malfunction of the portable terminal due to foreign substances.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been particularly shown and described with reference to embodiments thereof, it will be understood by those of ordinary skill in the art that various changes in form and details may be made therein without departing from the spirit and scope of the present invention as defined by the following claims.

## Claims

1. An apparatus (210, 212, 260) for detecting insertion of an external audio outputting device in an electronic device, the apparatus comprising:
an earphone socket (260) into which the external audio outputting device (400) is inserted, the earphone socket comprising first and second terminal sets (20, 40), each terminal set having at least two electrical contacts (20a, 20b, 40a, 40b); and
a controller (210) configured to determine an insertion condition if each of the terminal sets is shorted, and to determine a non-insertion condition if less than both of the terminal sets is shorted.

2. The apparatus (210, 212, 260) of claim 1, wherein a terminal set is shorted if the two electrical contacts (40a, 40b) thereof are shorted together; wherein the first terminal set is a ground terminal set (20) comprising a ground terminal (20a) and a ground detection terminal (20b) as the at least two electrical contacts thereof; and
the second terminal set is an L terminal set (40) comprising an L terminal (40a) and an L detection terminal (40b) as the at least two electrical contacts thereof.

3. The apparatus (210, 212, 260) of claim 1, wherein the controller controls running a preset application if determining that the external audio outputting device is inserted.

4. The apparatus (210, 212, 260) of claim 1, further comprising:
a first detection circuit (214-1) configured to provide to the controller a first detection signal (DET1, Com_Open_DET), the first detection signal being a first voltage level if the first terminal set is shorted and a different voltage level if the first terminal set is not shorted; and
a second detection circuit (214-2) configured to provide to the controller a second detection signal (DET2, Ear_Det), the second detection signal being a second voltage level if the second terminal set is shorted and another voltage level if the second terminal set is not shorted.

5. The apparatus (210, 212, 260) of claim 4, wherein the first terminal set is a ground terminal set comprising a ground terminal and a ground detection terminal as the at least two electrical contacts thereof; and
the second terminal set is an L terminal set comprising an L terminal and an L detection terminal as the at least two electrical contacts thereof.

6. The apparatus (210, 212, 260) of claim 5, wherein the ground detection terminal is connected to an output terminal (460) of the first detection circuit, the first detection signal being provided at the output terminal.

7. The apparatus (210, 212, 260) of claim 5, wherein the second detection circuit comprises an operational amplifier (702) providing the second detection signal (Ear_Det) at an output thereof.

8. The apparatus (210, 212, 260) of claim 7, further comprising a resistor coupled between a minus input port of the operational amplifier and the L detection terminal.

9. The apparatus (210, 212, 260) of claim 8, further comprising a resistive divider circuit comprising first and second resistors coupled to a positive input port of the operational amplifier.

10. The apparatus (210, 212, 260) of claim 1, wherein the electronic device is a portable terminal.

11. A portable terminal (200) comprising the apparatus of claim 1.

12. A method (300) of detecting insertion of an external audio outputting device in an electronic device having an earphone socket comprising first and second terminal sets, each terminal set comprising at least two electrical contacts, the method comprising:
determining (S401, S402, S403, S501) an insertion condition when each of the first and second terminal sets is shorted;
determining a non-insertion condition (S401, S402, S503) if only one of the terminal sets is shorted; and
determining the non-insertion condition (S401, S402, S503) if none of the terminal sets is shorted.

13. The method (300) of claim 12, wherein a terminal set is shorted when the electrical contacts of that terminal set are shorted together;
wherein the first terminal set is a ground terminal set comprising a ground terminal and a ground detection terminal as the at least two electrical contacts thereof; and
the second terminal set is an L terminal set comprising an L terminal and an L detection terminal as the at least two electrical contacts thereof.

14. The method (300) of claim 1, wherein determining an insertion condition comprises:
receiving a first detection signal from a first detection circuit, the first detection signal being a first voltage level if the first terminal set is shorted and a different voltage level if the first terminal set is not shorted; and
receiving a second detection signal from a second detection circuit, the second detection signal being a second voltage level if the second terminal set is shorted and another voltage level if the second terminal set is not shorted; and
determining the insertion condition when the first detection signal is at the first voltage level and the second detection signal is at the second voltage level.

15. A method of detecting insertion of an external audio outputting device in an electronic device, the method comprising:
once a detection signal is applied from a first detection device of an earphone socket into which the external audio outputting device is inputted, determining if a detection signal is applied from a second detection device of the earphone socket; and
if determining that the detection signal from the second detection device is applied, determining that the external audio outputting device is inserted into the earphone socket.
